# EUROPÄISCHE PATENTSCHRIFT

(11) **EP 4 028 283 B1**
(45) Veröffentlichungstag und Bekanntmachung des Hinweises auf die Patenterteilung: **08.11.2023**
(21) Anmeldenummer: 20772013.7
(22) Anmeldetag: 09.09.2020
(51) Int. Cl.: B60N 2/04, B60N 2/08, B60N 2/14, B60N 2/10, B60N 2/02

(54) **SITZANORDNUNG**
SEAT ASSEMBLY
ENSEMBLE SIÈGE

(30) Priorität: 09.09.2019 DE 102019213665
(43) Veröffentlichungstag der Anmeldung: 20.07.2022
(73) Patentinhaber: Adient US LLC, Plymouth, MI 48170 (US); KOSTAL Automobil Elektrik GmbH & Co. KG, 58513 Lüdenscheid (DE)
(72) Erfinder: DILLINGER, Thomas, 40880 Ratingen (DE); SCHIRP, Christian, 44789 Bochum (DE)
(74) Vertreter: Liedtke & Partner Patentanwälte
(86) Internationale Anmeldenummer: PCT/EP2020/075198
(87) Internationale Veröffentlichungsnummer: WO 2021/048206

(56) Entgegenhaltungen:
- EP-A2- 0 699 555
- WO-A1-2018/049228
- DE-A1- 10 141 875
- DE-A1-102017 221 987
- DE-C1- 10 138 893

## Beschreibung

Die Erfindung betrifft eine Sitzanordnung mit einem Sitz, insbesondere einem Schwebesitz, für ein Fahrzeug, insbesondere mit einem relativ zu einem Karosserieboden verstellbaren, insbesondere längsverstellbaren, neig-, dreh-und/oder schwenkbaren Fahrzeugsitz.

Im Stand der Technik, zum Beispiel in der WO 2019 193 040 A1, sind verstellbare Sitze, insbesondere Fahrzeugsitze, wie Schwebesitze (auch floating seat genannt) bekannt, um den Komfort zu maximieren. Im Allgemeinen umfasst ein solcher Sitz einer Sitzanordnung einen Verriegelungsmechanismus zum Ver- oder Entriegeln des Schwebesitzes und einen Verstellmechanismus.

Aus der DE 10 2017 221 987 A1 ist beispielsweise eine Sitzeinheit bekannt, welche einen Unterstützungskörper zur Aufnahme eines Insassen und einen Roboterarm aufweist, wobei der Unterstützungskörper an dem Roboterarm angeordnet ist. Aus der DE 101 38 893 C1 ist ein Sitzschienen-Paar für manuell längsverstellbare Kraftfahrzeugsitze bekannt.

Aufgabe der vorliegenden Erfindung ist es, eine Sitzanordnung mit einem Sitz, insbesondere einem Schwebesitz, mit verbessertem Komfort und besserer Sicherheit anzugeben.

Die Aufgabe wird erfindungsgemäß mit einer Sitzanordnung mit den Merkmalen des Patentanspruchs 1 gelöst.

Weiterbildungen der Erfindung sind Gegenstand der abhängigen Patentansprüche.

Die erfindungsgemäße Sitzanordnung umfasst zumindest einen Sitz mit einem Sitzflächenbereich und einem Rückenlehnenbereich, ein Basiselement, an welchem der Sitz verstellbar angeordnet ist, mindestens eine Verstelleinheit zur Verstellung des Sitzes relativ zu dem Basiselement und/oder einer Sitzbasis und mindestens eine Antriebseinheit, die eingerichtet ist, das Basiselement und den Sitz selbsthemmend zu arretieren, und wobei die Arretierung sowohl durch eine von einem in dem Sitz sitzenden Insassen über den Sitz in die Verstelleinheit eingeleitete Kraft als auch durch eine von der Antriebseinheit in die Verstelleinheit eingeleitete Kraft aufhebbar ist.

Die Erfindung ermöglicht in einfacher Art und Weise eine Kombination aus einer selbsttätigen Verstellung durch Schwerpunktverlagerung einer in dem Sitz sitzenden Person und einer motorisch angetriebenen Verstellung aufgrund eines eingestellten oder aktivierten Verstellmodus.

Der Sitz umfasst dabei beispielsweise eine Sitzfläche und eine Rückenlehne, die fest zueinander angeordnet sind. Die Sitzverstellung erfolgt dabei über eine Körperbewegung des in dem Sitz sitzenden Insassen. Anders als bei bisher bekannten Sitzverstellvorrichtungen werden Verstellungen um ein oder mehrere Verstellachsen dabei nicht über mit Hand bediente Eingabemöglichkeiten vorgenommen, sondern nur über eine Schwerpunktverlagerung bzw. Abstützung des Insassen gegen den Sitz, insbesondere die Sitzfläche des Sitzes.

In einer möglichen Ausführungsform ist der Sitz als eine Sitzschale ausgebildet. Anstelle einer Schalenform kann der Sitz aus einem Sitzteil und einer Rückenlehne gebildet sein. Diese können separate Sitzkomponenten sein, die miteinander verbunden sind. Alternativ kann der Sitz einteilig ausgebildet sein.

Die Erfindung ermöglicht darüber hinaus, dass der Sitz auch ohne Insassen verstellbar ist. Zum Beispiel kann der Sitz automatisch wieder in eine "normale" Ausgangsposition oder eine Position zum vereinfachten Ein-/Ausstieg gebracht werden. Eine solche Verstellung soll dabei nicht nur bei einem "leeren" Sitz, sondern auch ausführbar sein, wenn ein Insasse in dem Sitz sitzt. Beispielsweise kann so eine gespeicherte Position, wie zum Beispiel eine Sitz- oder leicht oder stark geneigte Position, automatisch wiedereingestellt werden.

Der Sitz umfasst in anderen Worten eine mechanische, motorisch angetriebene Verstellung, die sich das Prinzip einer Selbsthemmung zunutze macht, so dass eine separate Arretiervorrichtung vermeidbar ist.

Eine weitere Ausführungsform sieht vor, dass im Kraftfluss zwischen dem Sitz und dem Basiselement mindestens ein Kraftsensor angeordnet ist. Der Kraftsensor ist derart angeordnet und eingerichtet, dass er die auf die Verstelleinheit, wirkende Kraft misst. Dabei ist der Kraftsensor mit der Antriebseinheit derart gekoppelt, dass bei aktiviertem Verstellmodus und einer auf die Verstelleinheit, eingeleiteten Kraft infolge einer Bewegung des Insassen im Sitz die Selbsthemmung der Antriebseinheit aufgehoben oder zumindest reduziert wird. Beispielsweise hat hierzu der Insasse den Verstellmodus des Sitzes aktiviert, so dass infolge einer Schwerpunktverlagerung oder entsprechenden Abstützung des Insassen in der Sitzschale diese automatisch entsprechend bewegt wird.

Ein weiterer Aspekt sieht eine Steuereinheit vor, die mit der Antriebseinheit, dem Kraftsensor und/oder einer Aktivierungseinheit gekoppelt ist. Dabei ist die Steuereinheit mit dem Kraftsensor, der Antriebseinheit und/oder der Aktivierungseinheit zur Aktivierung eines Verstellmodus signal- und/oder steuertechnisch gekoppelt.

Eine weitere Ausführungsform sieht vor, dass ein Verstellwunsch des Insassen über eine Eingabeeinheit, zum Beispiel einen Schalter oder ein Sprachsignal, und/oder über die Aktivierungseinheit ermittelt wird. Durch Eingabe des Verstellwunsches oder eines Verstellmodus über die Eingabeeinheit, zum Beispiel über einen Sprachbefehl oder durch Betätigung eines Schalters, ist insbesondere einer von mehreren Verstellmodi aktivierbar. Alternativ oder zusätzlich kann der Sitz als Aktivierungseinheit mehrere Kontaktsensoren umfassen, zum Beispiel jene Sensoren die auch zur Sitzbelegungserkennung genutzt werden, um den Verstellmodus zu aktivieren. Der Verstellwunsch kann alternativ oder zusätzlich auch mit weniger Sensoren bestimmt werden, die antriebsnah die Kraftkomponente in Betätigungsrichtung der Antriebseinheit erfassen.

In einer möglichen Ausführungsform ist ein Schwebemode aktiviert, wobei die Steuereinheit eingerichtet ist, in dem aktivierten Schwebemode den Sitz derart zu bewegen, dass dieser einer Körperbewegung eines in dem Sitz sitzenden Insassen folgt. Dabei erfolgt keine Arretierung des Sitzes, insbesondere der Sitzschale, in einer eingenommenen Sitzposition.

Alternativ kann ein Verstellmode aktiviert sein, wobei die Steuereinheit eingerichtet ist, in dem aktivierten Verstellmode den Sitz derart zu bewegen, dass dieser der Körperbewegung eines in dem Sitz sitzenden Insassen in eine gewünschte Sitzposition folgt, und wobei der Sitz in der gewünschten Sitzposition arretiert wird.

In einer weiteren Alternative kann ein Fahrkomfortmode aktiviert sein, wobei die Steuereinheit eingerichtet ist, in dem aktivierten Fahrkomfortmode, den Sitz in Abhängigkeit von momentanen Fahrbewegungen des Fahrzeugs zu verstellen.

In einer weiteren Ausführungsform ist die Verstelleinheit eingerichtet, eine kombinierte Verstellbewegung des Sitzes relativ zum Basiselement auszuführen. Beispielsweise ist die Verstelleinheit eingerichtet, eine bogenförmige, kreisförmige und/oder lineare Verstellung auszuführen. In einer weiteren Ausführungsform ist die Verstelleinheit als ein Spindelantrieb und/oder Schienenversteller, insbesondere kreisförmiger Ring- und/oder linearer Längs- und/oder Querversteller, ausgebildet. Alternativ kann die Verstelleinheit als ein Seilzugmechanismus oder eine Kombination von mehreren, verschiedenartigen Verstelleinheiten ausgebildet sein. Beispielsweise ist der Seilzugmechanismus als ein Kreisbogenseilzug mit einem umlaufenden Seil ausgebildet.

Eine weitere Ausführungsform sieht vor, dass die Antriebseinheit mindestens eine Motorgetriebeeinheit umfasst, die mit der Verstelleinheit, insbesondere mit dem Seilzugmechanismus und/oder dem Schienenversteller, gekoppelt ist. Die Antriebseinheit umfasst und betätigt beispielsweise einen Bowdenzugmechanismus oder eine Spindel, der bzw. die ein Seil des Seilzugmechanismus und/oder eine Schiene mindestens einer Verstelleinheit betätigt, das bzw. die auf einen mit dem Sitz bewegungsgekoppelten Mitnehmer wirkt.

In einer möglichen Ausführungsform ist die Motorgetriebeeinheit als ein selbsthemmendes Schneckengetriebe mit Motor ausgebildet. Das Seil des Seilzugmechanismus oder die Schiene ist mit dem selbsthemmenden Schneckengetriebe der Motorgetriebeeinheit bewegungsgekoppelt. Beispielsweise ist das Seil mittels zwei Umlenkrollen gehalten, die mittels Bowdenzügen des Bowdenzug-mechanismus von der Motorgetriebeeinheit angetrieben werden. Darüber hinaus ist das Seil mit einem Mitnehmer gekoppelt, der an dem Sitz befestigt ist.

Wenn der Mitnehmer im Wesentlichen einem Kreisbogen oder Bogensegment der Sitzschale oder einer anderen Form der Sitzfläche folgt und das Seil sich sitzseitig auf dem Bogensegment ablegt, kann der Verstellmechanismus weitgehend steif ausgelegt werden, da kaum ein Längenausgleich für das Seil notwendig ist. Der Sitz ist dabei insbesondere über das Seil und die Selbsthemmung des Schneckengetriebes arretiert, aber bei Nutzung des Motors auch motorisch verstellbar.

Des Weiteren sind der Sitz und das Basiselement und/oder die Sitzbasis und der zwischen diesen angeordnete Kraftsensor derart wirkungsgekoppelt, dass als Kraftresultierende die von dem in dem Sitz sitzenden Insassen in den Sitz eingeleitete Kraft auf den Kraftsensor wirkt. Um insbesondere weitgehend nur die vom Insassen in den Sitz eingeleitete Kraft zu messen, stützt sich der Verstellmechanismus, insbesondere die Verstelleinheit mit ihren Komponenten, wie zum Beispiel einem Seilzugmechanismus, den Umlenkrollen und Mitnehmer, sowie die Antriebseinheit, über den Kraftsensor gegen das Basiselement und/oder die Sitzbasis, zum Beispiel ein Fahrzeugboden, ab.

Durch die Anordnung des Kraftsensors zwischen dem Sitz mit den auf einem Bauträger montierten Komponenten des Sitzes, wie Verstelleinheit, Antriebseinheit und Mitnehmer, und der Sitzbasis wird sichergestellt, dass eine zur Sicherstellung einer Spielfreiheit notwendige Vorspannung der Verstelleinheit, wie beispielsweise die notwendige Vorspannung eines Seiles eines Seilzugmechanismus, nicht das Kraftmesssignal überlagert, sondern nur resultierende Kräfte aus dem Verstellwunsch auf den Kraftsensor wirken.

Dazu ist das Basiselement mit zumindest der Verstelleinheit und/oder der Antriebseinheit und/oder diese selbst mittels Abstützpunkten an der Sitzbasis, zum Beispiel dem Fahrzeugboden, gelagert. Um diesen singulären Punkt der Kraftübertragung sicherzustellen, ist die Verstelleinheit und/oder die Antriebseinheit an den Abstützpunkten gegenüber der Sitzbasis derart gelagert, dass die Kraftkomponente in Messrichtung möglichst nicht beeinflusst wird.

Für einen kompakten Aufbau der Sitzanordnung kann oder können sowohl die Antriebseinheit als auch die Verstelleinheit und/oder die Steuereinheit dem Basiselement zugeordnet sein. Darüber hinaus kann eine separate Führung der Verstelleinheit, wie zum Beispiel des Seils, vorgesehen sein. Die Führung des Seils über die Umlenkrolle und die Bewegung des Seils über die Bowdenzüge ermöglicht es darüber hinaus, dass die Antriebseinheit dem Basiselement zugeordnet ist, so dass die Sitzschale weniger Gewicht trägt. Hierdurch ist auch die elektrische Versorgung des Motors vereinfacht.

Für die Drehung des Sitzes um seine Hochachse kann eine separate Verstelleinrichtung vorgesehen sein. Diese separate Verstelleinrichtung umfasst beispielsweise eine aus einem Motor und einer Schneckenradeinheit gebildete weitere Antriebseinheit, die direkt ohne Seilzugmechanismus an den Drehpunkt des Sitzes oder entlang eines Bogensegments einer Sitzschale des Sitzes mit dem Drehpunkt als Mittelpunkt angeordnet und mit dem Sitz bzw. der Sitzschale gekoppelt ist, wobei ein weiterer Kraftsensor als Übertragungselement von tangential wirkenden Kräften zwischen dem Sitz bzw. der Sitzschale und dem Basiselement angeordnet ist und die tangential wirkenden Kräfte misst.

Darüber hinaus können Kraftschwellwerte parametriert werden. Durch die Möglichkeit der Parametrierung von Kraftschwellwerten, des zeitlichen Verhaltens des Verstellmechanismus und des Übersetzungsfaktors von Krafteinwirkung und Verstellgeschwindigkeit kann das Verstellverhalten des Sitzes angepasst und geändert werden. Insbesondere ist durch weitere Sensoren zur Ortsbestimmung eine ortsabhängige Verstellungsparametrierung möglich.

Zusätzlich kann eine Anzahl von Endanschlägen zur Begrenzung der Verstellbewegung des Sitzes vorgesehen sein. Darüber hinaus kann eine Einklemmschutzeinrichtung auf Basis einer Sitzumfeldsensorik vorgesehen sein. Ferner können Umfeldeinflüsse, wie zum Beispiel eine Fahrzeugbeschleunigung oder -verzögerung, berücksichtigt, insbesondere kompensiert, werden. Hierzu werden mittels der Steuereinheit Fahrzeugparameter, wie Fahrzeugbeschleunigung oder -verzögerung, bestimmt und entsprechend ein angepasstes Steuersignal für die Antriebseinheit erzeugt.

Auch kann die Sitzschale mit einer Überlastsicherung zur Aufnahme von Überlastkräften versehen sein. Die Überlastsicherung verhindert, dass hohe Kräfte, zum Beispiel aufgrund eines Unfalls, über die Verstelleinheit und die selbsthemmende Antriebseinheit abgeleitet werden müssen. Eine solche Überlastsicherung ist beispielsweise aus zwei T-förmigen Hebeln gebildet, deren Fußpunkte an dem Sitz gelagert und miteinander verbunden sind. Oberhalb der Querbalken der T-förmigen Hebel ist beispielsweise ein Seil, insbesondere ein Stahlseil, oder eine Spindel angeschlagen. Unterhalb der Hebel ist jeweils eine dem anderen Hebel entgegengesetzte Sägezahnstruktur angeordnet.

Der Sitz ist in einer weiteren Ausführungsform als Sitzschale mit einem Sitzflächenbereich und einem Rückenlehnenbereich ausgebildet, wobei die Sitzschale in mindestens zwei Rotationsfreiheitsgraden relativ zu einem Basiselement mittels eines Verstellmechanismus verstellbar, insbesondere dreh-, neig- und/oder schwenkbar ist, wobei der Verstellmechanismus mindestens eine Verstelleinheit zur Verstellung der Sitzschale in mindestens einem der Rotationsfreiheitsgrade und mindestens eine zugehörige Antriebseinheit aufweist, die zur Verstellung der Sitzschale in den mindestens einen Rotationsfreiheitsgrad mittels einer Steuereinheit steuerbar ist, und wobei im Kraftfluss zwischen der mindestens einen Antriebseinheit und der betreffenden Verstelleinheit mindestens ein Kraftsensor angeordnet ist, der mit der Steuereinheit signal- und/oder steuertechnisch gekoppelt ist.

Die mit der Erfindung erzielten Vorteile bestehen insbesondere darin, dass ein solcher Sitz einer Sitzanordnung gesteuert entsprechend einer Körperbewegung einer in dem Sitz sitzenden Person verstellt werden kann. Somit kann der Sitz, insbesondere die Sitzschale, automatisch eine gewünschte Position einnehmen. Mittels eines solchen direkten kraftgesteuerten Verstellmechanismus ist der Sitz in Art eines freischwebenden Sitzes (auch Schwebesitz genannt) verstellbar oder bewegbar, insbesondere nach vorne oder nach hinten oder zur Seite neigbar und um eine Hochachse drehbar.

Der Kraftsensor liegt hierzu direkt im Kraftfluss zwischen dem Sitz, insbesondere der Verstelleinheit, zum Beispiel einem Schwenkmechanismus oder Drehmechanismus oder Neigungsmechanismus, und dem Basiselement, insbesondere der zugehörigen Antriebseinheit, zum Beispiel einer Antriebseinheit für den Schwenkmechanismus, einer Antriebseinheit für den Drehmechanismus und einer Antriebseinheit für den Neigungsmechanismus, und/oder der Sitzbasis, insbesondere einem Fahrzeugboden.

Dabei bewegt sich der Sitz in Richtung der mittels des Kraftsensors im jeweiligen Kraftfluss am stärksten gemessenen Kraft. Insbesondere wird der Sitz derart gesteuert verstellt, dass je stärker die gemessene Kraft im betreffenden Kraftfluss ist, desto schneller verstellt die zugehörige Antriebseinheit, zum Beispiel ein Verstellmotor, den Sitz.

Die Steuereinheit ist darüber hinaus derart eingerichtet, dass zur Verstellung des Sitzes optional oder zusätzlich verschiedene Verstellmodi aktivierbar sind.

Beispielsweise umfasst die Steuereinheit einen Schwebemode, welcher bei Aktivierung derart eingerichtet ist, dass der Sitz, insbesondere die Sitzschale, der Körperbewegung der in dem Sitz, insbesondere in der Sitzschale, sitzenden Person folgt. Hierzu steuert die Steuereinheit die Antriebseinheit/en in Abhängigkeit vom momentanen Kraftsignal des oder der Kraftsensors/en und damit entsprechend den Körperbewegungen - Neigung nach vorne oder hinten oder zur Seite und/oder Drehung des Sitzes um die Hochachse - und passt somit die Lage und/oder Position des Sitzes relativ zum Basiselement und/oder zur Sitzbasis fortlaufend körpersynchron an.

Die Steuereinheit kann darüber hinaus einen Verstellmode umfassen, welcher bei Aktivierung derart eingerichtet ist, dass der Sitz, zum Beispiel die Sitzschale, der Körperbewegung der in dem Sitz, zum Beispiel in der Sitzschale, sitzenden Person in eine gewünschte Sitzposition folgt, wobei der Sitz, insbesondere die Sitzschale, in dieser gewünschten Sitzposition verriegelt wird.

Ferner kann die Steuereinheit einen Fahrkomfortmode (auch aktiver Schwebemode genannt) umfassen, welcher bei Aktivierung derart eingerichtet ist, dass eine Verstellung des Sitzes, wie beispielsweise der Sitzschale, in Abhängigkeit von momentanen Fahrbewegungen des Fahrzeugs, wie Bremsen, Kurvenfahrt oder Beschleunigung, erfolgt. Beispielsweise wird der Sitz, wie beispielsweise die Sitzschale, bei einer Fahrt durch eine Kurve des Fahrzeugs entsprechend zur Seite geneigt, insbesondere entsprechend in die Kurve geneigt. Darüber hinaus kann der Sitz in Abhängigkeit von einer möglichen identifizierten Kollision in eine für die in dem Sitz, zum Beispiel in der Sitzschale, sitzenden Person sichere Sitzposition gestellt oder gehalten werden. Auch kann der Sitz bei entsprechend stark einwirkenden Kräften, wie diese bei einer Kollision auftreten, derart aktiv schwebend verstellt werden, dass der einwirkenden Kraft entgegengewirkt wird. Hierzu ist die Steuereinheit zusätzlich mit weiteren Sensoren, insbesondere mit Beschleunigungs-, Brems-, Geschwindigkeits- und/oder Kollisionssensoren, und/oder anderen Steuergeräten im Fahrzeug signaltechnisch gekoppelt.

Ein Aspekt sieht vor, dass der Sitz mittels des Verstellmechanismus relativ zum Basiselement zumindest um eine Querachse, insbesondere nach vorne, beispielsweise um -8°, oder nach hinten, beispielsweise um +15°, neigbar und um eine Hochachse, insbesondere bezogen auf eine Längsachse eines Fahrzeugs um 45° nach außen oder 15° nach innen, drehbar ist.

In einer möglichen Ausführungsform ist des Sitz relativ zum Basiselement in Längsrichtung um eine Querachse in einem Bereich zwischen -8° (nach vorne) bis +15° (nach hinten) relativ zu einer Null-Position, welche beispielsweise einer Sitz- oder Designstellung von +25° entspricht, neigbar und/oder in Querrichtung um eine Längsachse in einem Bereich zwischen 0° und 5° neig- oder rollbar und/oder um eine Hochachse des Schwebesitzes maximal bis zu 45° dreh- oder schwenkbar, insbesondere in Bezug auf eine Längsachse des Fahrzeugs um 45° nach außen oder um 15° nach innen drehbar.

Beispielsweise nimmt der Sitz in der Design- oder Sitzposition eine Stellung ein, in welcher der Sitz in Längsrichtung nach vorne und somit in Fahrt-/ Sichtrichtung ausgerichtet ist. Diese Stellung wird auch als 0°-Position in Bezug auf die Hochachse (Z-Achse) und Längsachse (X-Achse) bezeichnet. In dieser Design- oder Sitzposition ist der Sitz zum verbesserten Sitzkomfort um die Querachse (Y-Achse) beispielsweise +25° nach hinten neigbar. Der Sitz ist mittels des Verstellmechanismus gegenüber der Design- oder Sitzposition beispielsweise um die Querachse bis zu -8° nach vorne für einen verbesserten Ein- oder Ausstieg und bis zu 15° nach hinten für eine Sitzliegeposition neigbar. Maximal ist der Sitz um die Querachse bis zu 120° neigbar. Um die Hochachse ist die Sitzschale insbesondere maximal bis zu 280° drehbar, insbesondere um -90° bis zu +190°, insbesondere um 45° nach außen oder 15° nach innen in Bezug auf die Design- oder Sitzposition drehbar.

Ausführungsbeispiele der Erfindung werden anhand von Zeichnungen näher erläutert. Dabei zeigen:
- Figur 1: schematisch eine Sitzanordnung mit einem verstellbaren Sitz, einem Verstellmechanismus und einer Steuereinheit, welche mit einer Antriebseinheit zur Verstellung des Sitzes gekoppelt ist,
- Figur 2: schematisch in perspektivischer Darstellung eine Sitzanordnung mit einem verstellbaren Sitz, insbesondere einem Schwebesitz,
- Figur 3: schematisch in Draufsicht von oben auf eine Sitzfläche eines verstellbaren Sitzes einen Verstellmechanismus für den Sitz,
- Figur 4: schematisch in Draufsicht von unten den Verstellmechanismus des Sitzes gemäß Figur 3,
- Figur 5: schematisch in Schnittdarstellung den Verstellmechanismus gemäß Figur 3 oder 4,
- Figuren 6 bis 8: schematisch in verschiedenen Darstellungen den Verstellmechanismus im Bereich des Kraftsensors,
- Figur 9: schematisch in perspektivischer Darstellung einen Sitz mit frei verstellbarer Sitzschale,
- Figuren 10 bis 12: schematisch in perspektivischer Darstellung den Verstellmechanismus,
- Figur 13: eine schematische Ansicht einer weiteren Ausführungsform eines Sitzes mit einer frei verstellbaren Sitzschale mit selbsthemmender Antriebseinheit,
- Figur 14: eine schematische Ansicht einer Überlastsicherung im unbelasteten Zustand,
- Figur 15: eine schematische Ansicht einer Überlastsicherung im belasteten Zustand,
- Figur 16: eine perspektivische Ansicht einer weiteren Ausführungsform für einen Verstellmechanismus mit gekoppelter Antriebseinheit und
- Figur 17: schematisch eine Ausführungsform für eine Kopplung von Steuereinheit, Kraftsensor und Antriebseinheit.

Einander entsprechende Teile sind in allen Figuren mit den gleichen Bezugszeichen versehen.

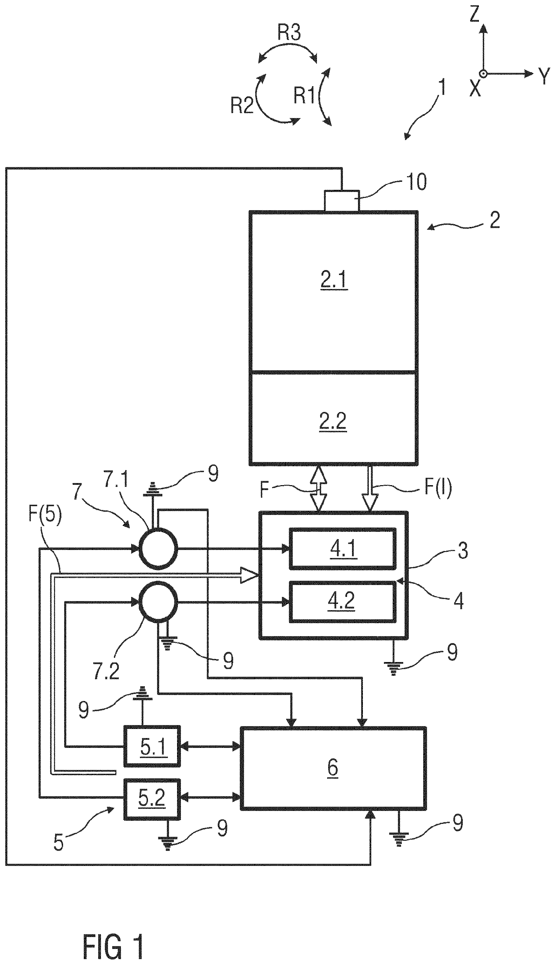

**Figur 1** zeigt schematisch einen Sitz 2, insbesondere einen Fahrzeugsitz. Der Sitz 2 ist insbesondere in einem Fahrzeug vorgesehen und dort an einem Fahrzeugboden in nicht näher dargestellter Art und Weise befestigt. Der Sitz 2 ist als ein bewegbarer, insbesondere freischwebend verstellbarer Sitz 2 (auch Schwebesitz genannt) ausgebildet. Der Sitz 2 kann als eine Sitzschale, wie dargestellt und nachfolgend näher beschrieben, ausgebildet sein. Alternativ kann der Sitz 2 in herkömmlicher Weise mehrteilig aus Sitzteil und Rückenlehne gebildet sein (nicht näher dargestellt). Die nachfolgende Verstellung des Sitzes 2 am Beispiel der Sitzschale gilt analog zur Verstellung eines mehrteiligen Sitzes.

Dabei kann der Sitz 2 der Sitzanordnung 1 in verschiedenen Modi bewegbar sein, wie es nachfolgend beschrieben wird. Hierzu umfasst die Sitzanordnung 1 ein Basiselement 3, an welchem der Sitz 2 verstellbar gegenüber dem Basiselement 3 und/oder einer Sitzbasis 9 angeordnet ist. Zur Verstellung des Sitzes 2 umfasst die Sitzanordnung 1 mindestens eine Verstelleinheit 4 und eine Antriebseinheit 5.

Der Sitz 2 ist als eine Sitzschale mit einem Rückenlehnenbereich 2.1 und einem Sitzflächenbereich 2.2 ausgebildet.

Zur besseren Übersichtlichkeit und Beschreibung der Sitzverstellung anhand der Verstellung einer Sitzschale wird die Sitzschale nachfolgend "Sitzschale 2" genannt:
Die Sitzschale 2 ist in mindestens zwei von mehreren Rotationsfreiheitsgraden R1 bis R3 relativ zu einem Basiselement 3 mittels einer Verstelleinheit 4 verstellbar, insbesondere dreh-, neig- und/oder schwenkbar. Ein erster Rotationsfreiheitsgrad R1 ermöglicht eine Verstellung der Sitzschale 2 um eine Querachse Y, ein zweiter Rotationsfreiheitsgrad R2 ermöglicht eine Verstellung der Sitzschale 2 um eine Längsachse X und ein dritter Rotationsfreiheitsgrad R3 ermöglicht eine Verstellung um eine Hochachse Z.

Die Verstelleinheit 4 kann je Rotationsfreiheitsgrad R1, R2 mindestens eine separate Verstelleinheit 4.1, 4.2 (dargestellt in Figuren 1 und 2 bis 6, 10 bis 11) zur Verstellung der Sitzschale 2 umfassen.

Die jeweilige Verstelleinheit 4, 4.1, 4.2 ist mit mindestens einer zugehörigen Antriebseinheit 5, 5.1, 5.2 zur Bewegung, insbesondere freischwebenden Bewegung oder Verstellung, der Sitzschale 2 gekoppelt. Zur gesteuerten Bewegung, insbesondere Verstellung, der Sitzschale 2 in dem mindestens einen Rotationsfreiheitsgrad R1, R2 ist bzw. sind die jeweilige Antriebseinheit/en 5, 5.1, 5.2 mittels einer Steuereinheit 6 steuerbar.

Darüber hinaus ist im Kraftfluss F zwischen der mindestens einen Antriebseinheit 5, 5.1, 5.2 und der betreffenden Verstelleinheit 4, 4.1, 4.2 jeweils mindestens ein Kraftsensor 7, 7.1, 7.2 angeordnet, der mit der Steuereinheit 6 signal- und/oder steuertechnisch gekoppelt ist.

Darüber hinaus umfasst die Sitzanordnung 1 eine Aktivierungseinheit 10 zur Aktivierung eines Verstellmodus zur Entriegelung und Verstellung der Sitzschale 2. Die Aktivierungseinheit 10 ist ebenfalls signal- und/oder steuertechnisch mit der Steuereinheit 6 gekoppelt.

Eine Sitzanordnung 1 mit einer solch ausgebildeten Sitzschale 2 mit mittels Kraftsensoren 7, 7.1, 7.2 gesteuerten Antriebseinheiten 5, 5.1, 5.2 und Verstelleinheiten 4, 4.1, 4.2 ermöglicht eine individuelle, insbesondere komfortable und beispielsweise freischwebende, Bewegung der Sitzschale 2. Insbesondere kann eine Sitzanordnung 1 mit einem solchen Sitz 2 gesteuert entsprechend einer Körperbewegung einer auf der Sitzschale 2 sitzenden Person, verstellt werden. Somit kann der Sitz 2, insbesondere die Sitzschale 2, automatisch frei beweglich eine gewünschte Position einnehmen. Mittels eines solchen direkt kraftgesteuerten Verstellmechanismus mit einer oder mehreren Verstelleinheiten 4, 4.1, 4.2 ist die Sitzschale 2 in Art einer freischwebenden Sitzschale 2 verstellbar oder bewegbar, insbesondere nach vorne oder nach hinten um eine Querachse Y oder zur Seite um eine Längsachse X neigbar und um eine Hochachse Z drehbar.

Dabei ist die jeweilige Antriebseinheit 5, 5.1 und/oder 5.2 eingerichtet, das Basiselement 3 und die Sitzschale 2 selbsthemmend zu arretieren, wobei die Arretierung sowohl durch eine von einem in der Sitzschale 2 sitzenden Insassen über die Sitzschale 2 in die Verstelleinheit 4, 4.1 und/oder 4.2 eingeleitete Kraft F(I) als auch durch eine von der Antriebseinheit 5, 5.1 und/oder 5.2 in die Verstelleinheit 4, 4.1 und/oder 4.2 eingeleitete Kraft F(5) aufhebbar ist.

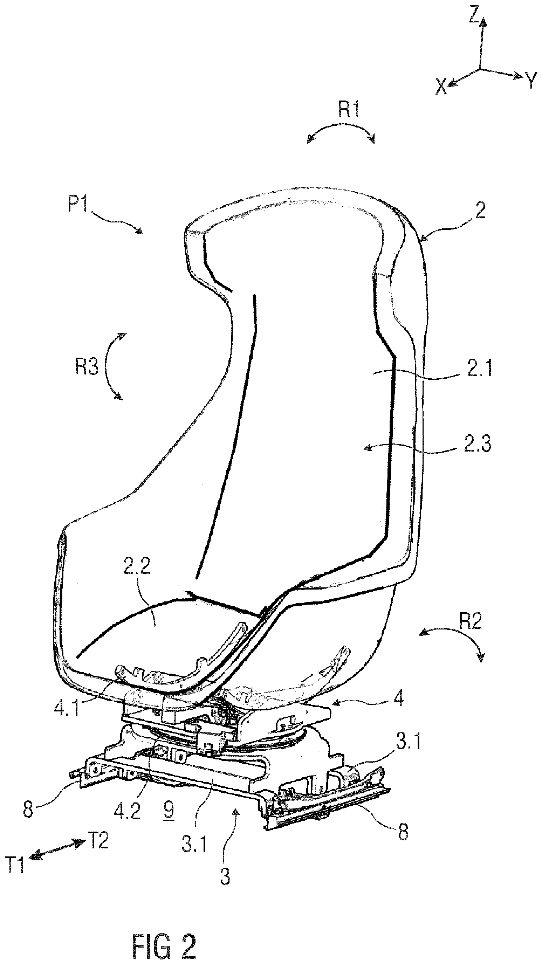

**Figur 2** zeigt schematisch in perspektivischer Darstellung den bewegbaren, insbesondere verstellbaren Sitz 2. Der Sitz 2 ist als ein Schwebesitz oder eine freischwebende oder frei bewegliche Sitzschale 2 ausgebildet.

Die Sitzschale 2 kann dabei einteilig oder einstückig aus dem Rückenlehnenbereich 2.1 und dem Sitzflächenbereich 2.2 gebildet sein. Alternativ kann die Sitzschale 2 aus einem separaten Rückenlehnenbereich 2.1 und einem an diesem verstellbar, insbesondere neigbar, angeordneten Sitzflächenbereich 2.2 gebildet sein (nicht näher dargestellt). Die Sitzschale 2 umfasst einen Träger 2.3, insbesondere eine Hartschaumschale oder Verbundstoff-Schale, insbesondere aus einem faserverstärktem Kunststoff. Darüber hinaus kann die Sitzschale 2 mit einem auf diesem angeordneten, nicht näher dargestellten Polsterelement, insbesondere einem Schaumpolster mit oder ohne Bezug, versehen sein.

Die einteilige Sitzschale 2 ist relativ zum Basiselement 3 bewegbar. Zwischen der Sitzschale 2 und dem Basiselement 3 ist als Verstellmechanismus eine Anzahl von Verstelleinheiten 4 bis 4.2 angeordnet.

Insbesondere ist der Verstellmechanismus eingerichtet, eine kombinierte Verstellbewegung der Sitzschale 2 relativ zum Basiselement 3 auszuführen. Beispielsweise ist die Verstelleinheit 4, 4.1 bis 4.2 eingerichtet, eine bogenförmige, kreisförmige und/oder lineare Verstellung auszuführen. In einer weiteren Ausführungsform ist die Verstelleinheit 4, 4.1 bis 4.2 als ein Spindelantrieb und/oder Schienenversteller, insbesondere kreisförmiger Ring- und/oder linearer Längs- und/oder Querversteller, ausgebildet. Die jeweilige Verstelleinheit 4, 4.1 bis 4.2 kann hierzu ein Gelenk-, Gleit-, Schienen- oder Rolllager umfassen. Damit ist die Sitzschale 2 bewegbar, insbesondere gleitend bewegbar, insbesondere neig-, dreh- und/oder schwenkbar, am Basiselement 3 gelagert. Mittels der Verstelleinheiten 4, 4.1, 4.2 ist die Sitzschale 2 relativ zum Basiselement 3 in zumindest zwei oder allen drei Rotationsfreiheitsgraden R1, R2 und/oder R3 bewegbar, insbesondere neig-, dreh- oder schwenkbar.

Beispielsweise nimmt die Sitzschale 2 in einer Design- oder Sitzposition P1 eine Stellung ein, in welcher die Sitzschale 2 in Längsrichtung x nach vorne und somit in Fahrt-/Sichtrichtung ausgerichtet ist. Diese Sitzposition P1 wird auch als 0°-Position in Bezug auf die Hochachse Z und Längsachse X bezeichnet. In dieser Sitzposition P1 ist die Sitzschale 2 zum verbesserten Sitzkomfort um die Querachse Y beispielsweise um 25° nach hinten geneigt. Dabei ist der Verstellmechanismus mit den Verstelleinheiten 4, 4.1 bis 4.2 derart eingerichtet, dass die Sitzschale 2 gegenüber der Design- oder Sitzposition P1 beispielsweise um die Querachse Y (Rotationsfreiheitsgrad R1) bis zu -10° oder -8° nach vorne und bis zu +15° nach hinten gegenüber den 25° neigbar ist und/oder um die Hochachse Z (Rotationsfreiheitsgrad R2) insbesondere maximal bis zu 280° drehbar, insbesondere um +45° nach außen und -15° nach innen drehbar ist.

Der Verstellmechanismus umfasst insbesondere je Rotationsfreiheitsgrad R1, R2 eine zugehörige Verstelleinheit 4.1 und 4.2. Die Verstelleinheit 4.1 zur Neigungsbewegung der Sitzschale 2 um die Querachse Y nach vorne oder hinten oder um die Längsachse X zu den Seiten ist beispielsweise als ein Drehgelenk-, Gleit- oder Seilzugmechanismus 41.1 oder ein Schienenverstellmechanismus mit Rollenlagern ausgebildet. Die Verstelleinheit 4.2 zur Drehbewegung der Sitzschale 2 um die Hochachse Z ist beispielsweise als ein Ringschienenmechanismus mit Rollenlagern ausgebildet.

Die Verstelleinheiten 4.1, 4.2 sind miteinander bewegungsgekoppelt. Darüber hinaus sind die Verstelleinheiten 4.1, 4.2 zwischen der Sitzschale 2, insbesondere unterhalb der Sitzschale 2, insbesondere zwischen einer Unterseite des Sitzflächenbereiches 2.2, und dem Basiselement 3 angeordnet.

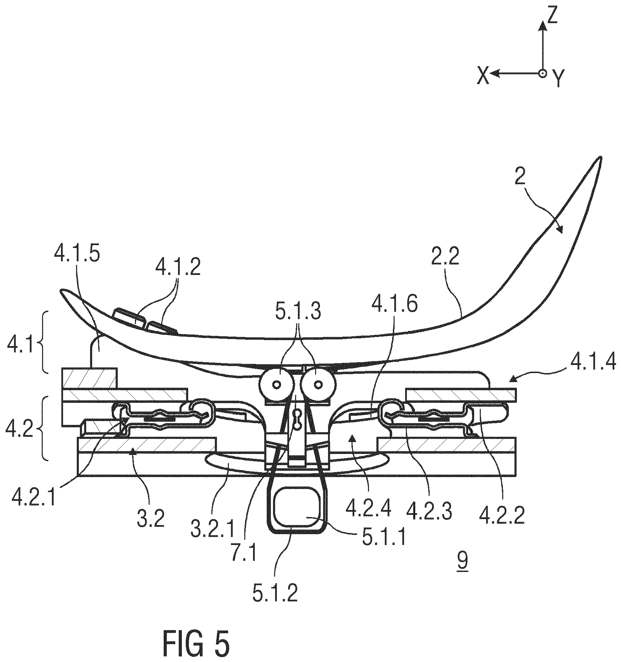

Das Basiselement 3 kann darüber hinaus an einer Längsverstelleinheit 8, insbesondere einem Schienenpaar, zur Längsverstellung des Sitzes 1 relativ zu der Sitzbasis 9, zum Beispiel einem Fahrzeugboden, angeordnet sein. Das Basiselement 3 ist beispielsweise ein Sitzträger und umfasst mehrere Querträgerelemente 3.1. Alternativ kann das Basiselement 3 auch als eine Trägerplatte 3.2 (dargestellt zum Beispiel in Figuren 5, 9, 16) ausgebildet sein.

Für eine kompakte Anordnung können die Antriebseinheiten 5.1, 5.2 und die Steuereinheit 6 dem Basiselement 3 zugeordnet sein und an diesem montiert und befestigt sein. Das Basiselement 3 ist wiederum an der Sitzbasis 9 montiert.

Die Sitzanordnung 1 ist somit derart ausgebildet, dass eine Position der Sitzschale 2 relativ zum Basiselement 3 und/oder zur Sitzbasis 9 beispielsweise mittels der Längsverstelleinheit 8 in Translationsfreiheitsgraden T1, T2 in Längsrichtung x und/oder mittels der Verstelleinheiten 4.1, 4.2 in den Rotationsfreiheitsgraden R1 bis R3 einstellbar ist. Dazu ist der Verstellmechanismus mit den Verstelleinheiten 4.1, 4.2 vorgesehen. Durch die freie Bewegung, insbesondere Ein- oder Verstellung der Position der Sitzschale 2 in mehr als zwei Freiheitsgraden wird der Eindruck einer schwebenden oder gleitenden Sitzschale 2 erzeugt, welche einer Bewegung einer Person in der Sitzschale 2 in Folge einer Schwerpunktverlagerung der in der Sitzschale 2 sitzenden Person folgt.

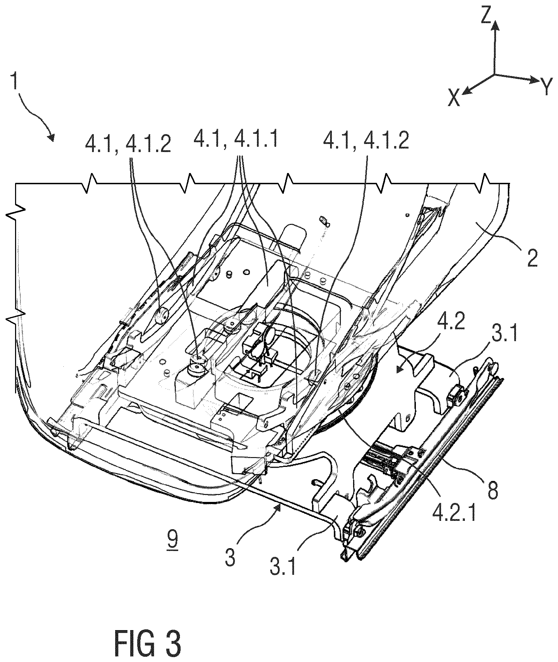

**Figur 3** zeigt schematisch in teiltransparenter Draufsicht von oben auf den Sitzflächenbereich 2.2 des bewegbaren Sitzes 1 den Verstellmechanismus mit der Verstelleinheit 4.1 (auch Y-Verstelleinheit 4.1 genannt) zur Neigungsbewegung der Sitzschale 2 um die Querachse Y nach vorne oder hinten und der Verstelleinheit 4.2 (auch Z-Verstelleinheit 4.2 genannt) zur Drehbewegung der Sitzschale 2 um die Hochachse Z.

Die Y-Verstelleinheit 4.1 ist beispielsweise als ein Gleit-, insbesondere ein Schienen-Rollen-Mechanismus ausgebildet. Die Y-Verstelleinheit 4.1 umfasst zumindest drei Schienen 4.1.1 und jeweils zugehörige Rollenlager mit Rollen 4.1.2, mittels welcher die Sitzschale 2 relativ zum Basiselement 3 gleitend gelagert ist. Die Z-Verstelleinheit 4.2 ist beispielsweise als ein Ringschienenverstellmechanismus mit einer Ringschiene 4.2.1 ausgebildet.

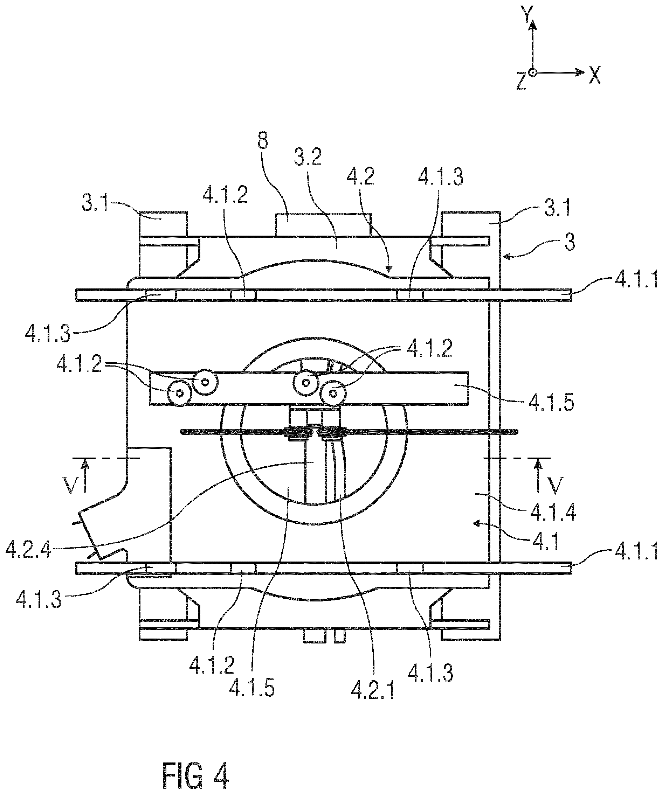

**Figur 4** zeigt schematisch in Draufsicht von unten den Verstellmechanismus 4 des Sitzes 1 gemäß Figur 3.

Die Verstelleinheit 4.1 zur Neigungsbewegung der Sitzschale 2 um die Querachse Y nach vorne oder hinten umfasst mindestens zwei voneinander beabstandete gebogene Schienen 4.1.1 mit Rollen 4.1.2 zum gleitenden oder zur wälzenden Bewegung der Sitzschale 2 auf den Schienen 4.1.1. Die jeweilige Schiene 4.1.1 umfasst darüber hinaus in Längsrichtung x in Richtung der Sitzschale 2 abstehende Endanschläge 4.1.3 zur Begrenzung der Neigungsbewegung der Sitzschale 2 um die Querachse Y nach vorne und nach hinten. Die Verstelleinheit 4.1 umfasst ein Trägerelement 4.1.4 insbesondere eine Trägerplatte 3.2 zur Befestigung der Schienen 4.1.1.

Zusätzlich kann die Verstelleinheit 4.1 eine Führungsschiene 4.1.5 mit Rollen 4.1.2 umfassen. Die Führungsschiene 4.1.5 und die Rollen 4.1.2 stellen sicher, dass kein Spiel in Y-Richtung (Querbewegung) oder in Z-Richtung (Rotation oder Drehung um Hochachse Z) auftritt. Die Führungsschiene 4.1.5 kann gerade oder gebogen ausgebildet sein. Alternativ kann die Führungsschiene 4.1.5 auch funktional in die Längsverstelleinheit 8 implementiert sein (nicht näher dargestellt).

Die Verstelleinheit 4.2 zur Drehbewegung der Sitzschale 2 um die Hochachse Z umfasst eine Ringschiene 4.2.1, welche in einer Durchgangsöffnung 4.1.6 des Trägerelements 4.1.4 angeordnet und befestigt ist.

Die Ringschiene 4.2.1 ist als ein horizontales Ringschienenpaar ausgebildet und umfasst eine obere Ringschiene 4.2.2 und eine untere Ringschiene 4.2.3. Die obere Ringschiene 4.2.2 ist fest im Trägerelement 4.1.4 gehalten. Die untere Ringschiene 4.2.3 ist fest am Basiselement 3 gehalten. Das Basiselement 3 umfasst zusätzlich zu den Querträgerelementen 3.1 auch eine Trägerplatte 3.2 zur Befestigung der unteren Ringschiene 4.2.3.

**Figur 5** zeigt schematisch in Schnittdarstellung den Verstellmechanismus mit den Verstelleinheiten 4.1 und 4.2 gemäß Figur 3 oder 4.

Die Trägerplatte 3.2 und das Trägerelement 4.1.4 weisen jeweils zentrierte Durchgangsöffnungen 3.2.1 bzw. 4.1.6 auf, welche übereinander liegen. Die Ringschienen 4.2.2, 4.2,3 sind derart zu der Trägerplatte 3.2 und dem Trägerelement 4.1.4 angeordnet, dass deren innere Ringöffnung 4.2.4 und die Durchgangsöffnungen 3.2.1, 4.1.6 der unteren Trägerplatte 3.2 bzw. des oberen Trägerelements 4.1.4 übereinander liegen.

Nachfolgend wird am Beispiel der Verstelleinheit 4.1 für die Neigungsbewegung der Sitzschale 2 um die Querachse Y die kraftgesteuerte Bewegung der Sitzschale 2 beschrieben.

Der Kraftsensor 7.1 liegt hierzu im Kraftfluss F zwischen der Sitzschale 2 und der Sitzbasis 9. Der Kraftsensor 7.1 für die Verstelleinheit 4.1 liegt insbesondere direkt im Kraftfluss F zwischen der Verstelleinheit 4.1 und der zugehörigen Antriebseinheit 5.1.

Der Kraftsensor 7.1 ist beispielsweise als ein Zug- und/oder Drucksensor zur Erfassung von Druck- und/oder Zugbelastungen ausgebildet. Beispielsweise ist der Kraftsensor 7.1 ein Dehnungsmessstreifen oder ein anderes geeignetes Bauteil, welches eine Verformung, insbesondere Dehnung oder Stauchung erfasst. Der Kraftsensor 7.1 ist mit der Steuereinheit 6 signal- und steuertechnisch verbunden.

Die Antriebseinheit 5.1 ist im Ausführungsbeispiel als ein Bowdenzugmechanismus 5.1.5 ausgebildet. Die Antriebseinheit 5.1 umfasst beispielsweise einen Motor 5.1.1 und einen Bowdenzug 5.1.2 sowie Kraftübertragungselemente 5.1.3 zur Übertragung der Verstellkraft des Motors 5.1.1 auf eine Verstellbewegung der Sitzschale 2 entlang der Verstelleinheit 4.1, insbesondere der Schienen 4.1.1 und der Führungsschiene 4.1.5. Der Bowdenzug 5.1.2 ist hierzu endseitig sowohl an der Sitzschale 2 als auch an der Abtriebsseite des Motors 5.1.1 befestigt.

Anstelle eines Bowdenzugmechanismus 5.1.5 kann auch ein anderer geeigneter Mechanismus verwendet werden. Bevorzugt wird eine nicht näher dargestellte Motor-Getriebeeinheit mit Zahnrädern verwendet.

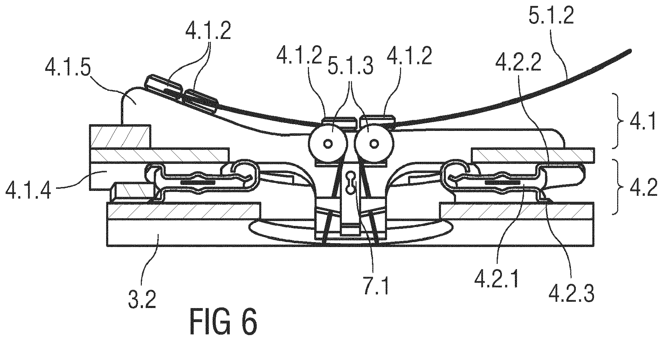

**Figuren 6 bis 8** zeigen schematisch in verschiedenen Darstellungen den Verstellmechanismus mit den Verstelleinheiten 4.1, 4.2 im Bereich des Kraftsensors 7.1. Die Kraftübertragungselemente 5.1.3 sind beispielsweise als Umlenkrollen 41.3 für den Bowdenzug 5.1.2 ausgebildet.

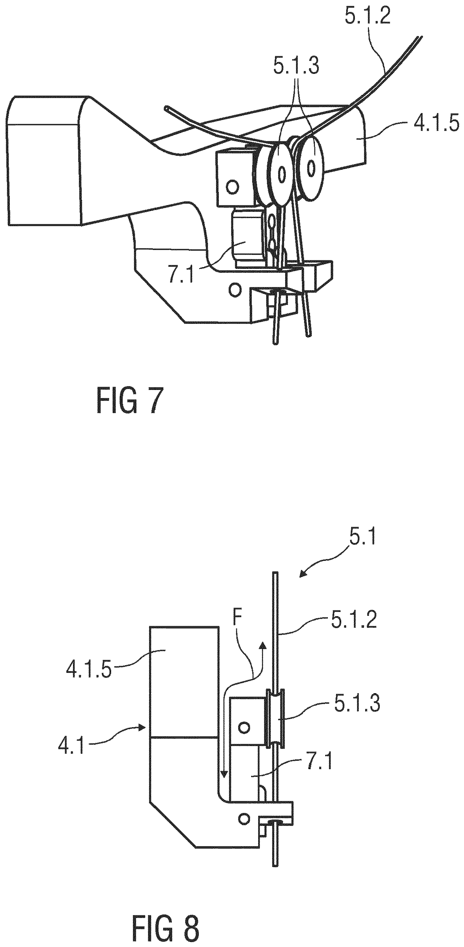

**Figur 8** zeigt die Anordnung des Kraftsensors 7.1 direkt im Kraftfluss F zwischen der Verstelleinheit 4.1 und der Antriebseinheit 5.1.

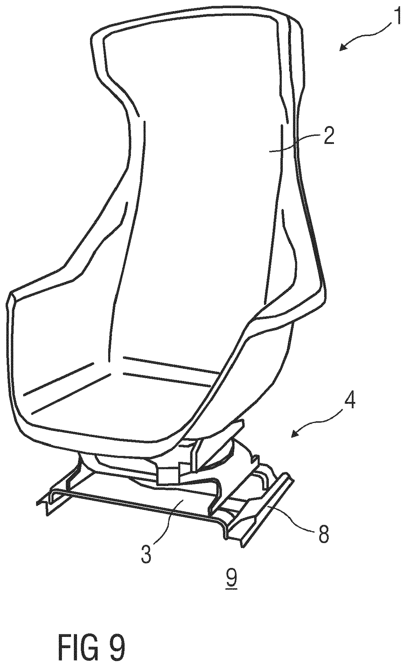

**Figur 9** zeigt schematisch in perspektivischer Darstellung die Sitzanordnung 1 mit frei verstellbarer Sitzschale 2.

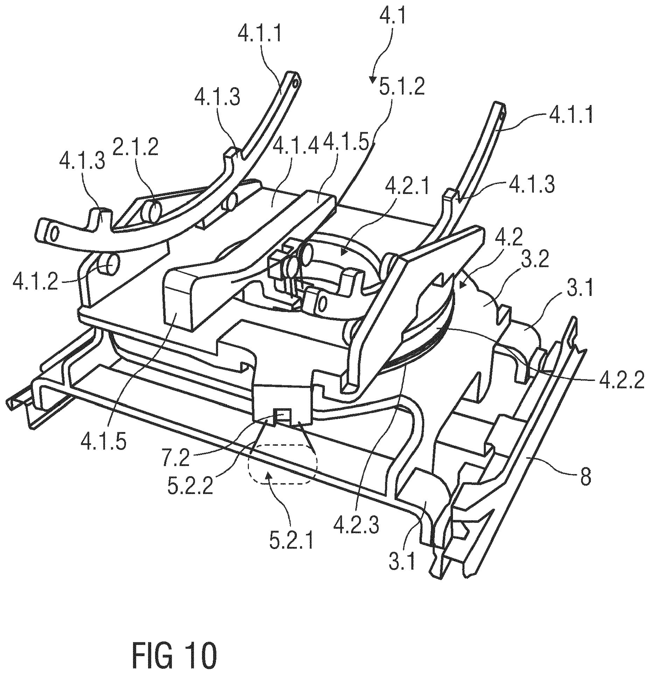

**Figuren 10 bis 12** zeigen schematisch in perspektivischer Darstellung den Verstellmechanismus mit den Verstelleinheiten 4.1 und 4.2 ohne Sitzschale 2.

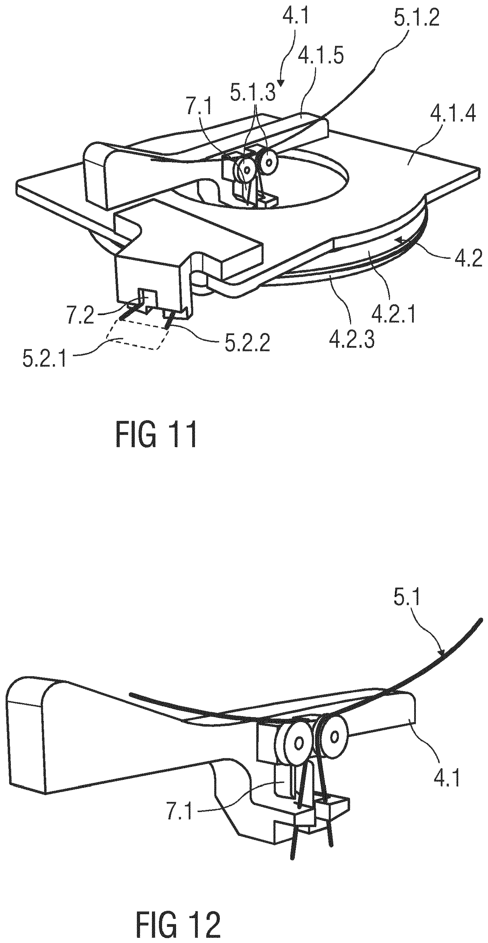

**Figuren 11 und 12** zeigen die Antriebseinheit 5.2 für die Verstelleinheit 4.2 zur Drehung der Sitzschale 2 um die Hochachse Z. Die Antriebseinheit 5.2 ist im Ausführungsbeispiel als Bowdenzugmechanismus 5.1.5 beispielhaft dargestellt. Bevorzugt wird diese als eine Motor-Getriebeeinheit mit Zahnrädern ausgebildet sein. Im Kraftfluss F zwischen der Sitzschale 2 und der Sitzbasis 9, insbesondere zwischen der Antriebseinheit 5.2 und der Verstelleinheit 4.2, ist in analoger Weise wie für die Verstelleinheit 4.1 der zugehörige Kraftsensor 7.2 angeordnet.

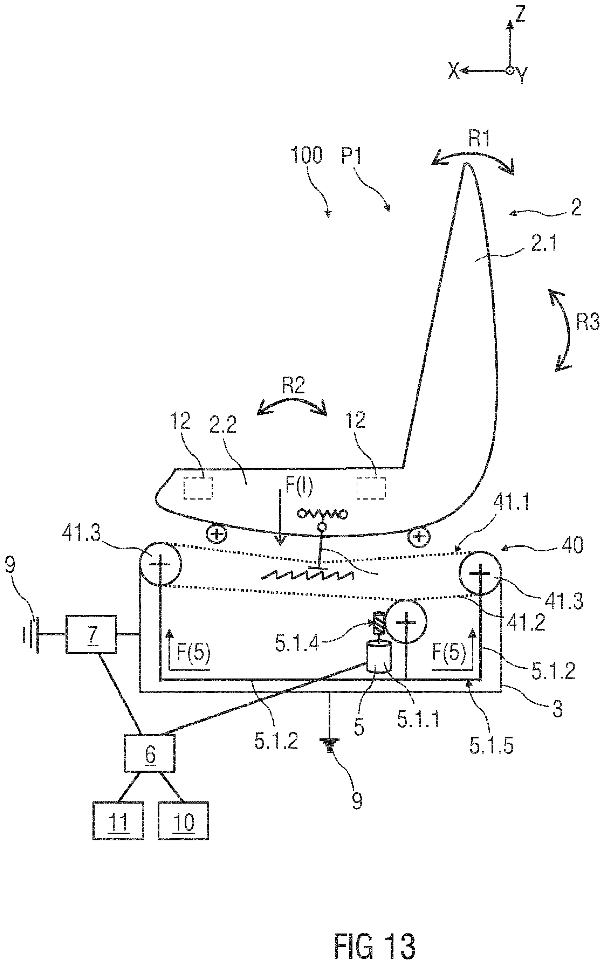

**Figur 13** zeigt eine schematische Ansicht einer weiteren Ausführungsform einer Sitzanordnung 100 mit einer frei verstellbaren Sitzschale 2 mit selbsthemmender Antriebseinheit 5.

Die Sitzanordnung 100 ist insbesondere als ein Schwebesitz ausgebildet. Die Sitzschale 2 umfasst analog zur Sitzanordnung 1 den Sitzflächenbereich 2.2 und den Rückenlehnenbereich 2.1 sowie das Basiselement 3, an welchem die Sitzschale 2 verstellbar angeordnet ist.

Des Weiteren umfasst die Sitzanordnung 100 eine Verstelleinheit 40 zur Verstellung der Sitzschale 2 relativ zu dem Basiselement 3. Darüber hinaus umfasst die Sitzanordnung 100 die mindestens eine selbsthemmende Antriebseinheit 5.

Die Antriebseinheit 5 ist eingerichtet, das Basiselement 3 und die Sitzschale 2 selbsthemmend zu arretieren, wobei die Arretierung sowohl durch eine von einem in der Sitzschale 2 sitzenden Insassen über die Sitzschale 2 in die Verstelleinheit 40 eingeleitete Kraft F(I) als auch durch eine von der Antriebseinheit 5 in die Verstelleinheit 40 eingeleitete Kraft F(5) aufhebbar ist.

Die Sitzschale 2 ist somit durch eine selbsttätige Verstellung durch Schwerpunktverlagerung der in der Sitzschale 2 sitzenden Person und/oder durch eine durch die Antriebseinheit 5 motorisch angetriebene Verstellung aufgrund eines eingestellten oder aktivierten Verstellmodus verstellbar.

Die Sitzschale 2 ist einteilig ausgebildet oder kann beispielsweise eine Sitzfläche und eine Rückenlehne umfassen, die fest zueinander angeordnet sind. Die Sitzverstellung erfolgt insbesondere über eine Körperbewegung des in der Sitzschale 2 sitzenden Insassen. Anders als bei bisher bekannten Sitzverstellvorrichtungen werden Verstellungen um ein oder mehrere Verstellachsen dabei nicht über mit Hand bediente Eingabemöglichkeiten vorgenommen, sondern nur über eine Schwerpunktverlagerung bzw. Abstützung des Insassen gegen die Sitzschale 2, insbesondere die Sitzfläche der Sitzschale 2.

Darüber hinaus kann die Sitzschale 2 auch ohne Insassen verstellbar sein. Zum Beispiel kann die Sitzschale 2 automatisch wieder in eine "normale" Ausgangsposition oder Sitzposition P1 oder eine Position zum vereinfachten Ein-/Ausstieg, insbesondere eine geneigte Position (nicht näher dargestellt), gebracht werden. Eine solche Verstellung soll dabei nicht nur bei einem "leeren" Sitz oder einer "leeren" Sitzschale 2, sondern auch dann ausführbar sein, wenn ein Insasse in der Sitzschale 2 sitzt. Beispielsweise kann eine gespeicherte Position, wie zum Beispiel eine Sitzposition P1, automatisch wiedereingestellt werden.

Die Sitzanordnung 100 umfasst eine mechanische, motorisch angetriebene Verstellung, die sich das Prinzip einer Selbsthemmung zunutze macht, so dass eine separate Arretiervorrichtung vermeidbar ist.

Hierzu ist im Kraftfluss F zwischen dem Verstellmechanismus 40 und der Sitzbasis 9 mindestens ein Kraftsensor 7 angeordnet.

Der Kraftsensor 7 ist derart angeordnet und eingerichtet, dass er die auf die Verstelleinheit 40 wirkende Kraft F(I) oder F(5) misst. Dabei ist der Kraftsensor 7 mit der Antriebseinheit 5 derart gekoppelt, dass bei aktiviertem Verstellmodus und einer auf die Verstelleinheit 40 eingeleiteten Kraft F(I) beispielsweise infolge einer Bewegung des Insassen in der Sitzschale 2 die Selbsthemmung der Antriebseinheit 5 aufgehoben oder zumindest reduziert wird. Beispielsweise hat hierzu der Insasse den Verstellmodus der Sitzanordnung 100 mittels der Aktivierungseinheit 10 aktiviert, so dass infolge einer Schwerpunktverlagerung oder entsprechenden Abstützung des Insassen in der Sitzschale 2 diese automatisch entsprechend bewegt wird.

Die Steuereinheit 6 ist dabei mit der Antriebseinheit 5, dem Kraftsensor 7 und/oder der Aktivierungseinheit 10 gekoppelt. Beispielsweise ist die Steuereinheit 6 mit dem Kraftsensor 7, der Antriebseinheit 5 und/oder der Aktivierungseinheit 10 signal- und/oder steuertechnisch gekoppelt.

Im Betrieb wird beispielsweise ein Verstellwunsch des Insassen über eine Eingabeeinheit 11, zum Beispiel einen Schalter oder ein Sprachsignal, und/oder über die Aktivierungseinheit 10 ermittelt. Durch Eingabe des Verstellwunsches oder eines Verstellmodus über die Eingabeeinheit 11, zum Beispiel über einen Sprachbefehl oder durch Betätigung eines Schalters, ist insbesondere einer von mehreren Verstellmodi aktivierbar. Alternativ oder zusätzlich kann die Sitzanordnung 100 als Aktivierungseinheit 10 mehrere Kontaktsensoren 12 umfassen, zum Beispiel jene Sensoren, die auch zur Sitzbelegungserkennung genutzt werden, um den Verstellmodus zu aktivieren. Der Verstellwunsch kann alternativ oder zusätzlich auch mit weniger Sensoren bestimmt werden, die antriebsnah die Kraftkomponente in Betätigungsrichtung der Antriebseinheit 5 erfassen.

In einer möglichen Ausführungsform ist ein Schwebemode aktiviert, wobei die Steuereinheit 6 eingerichtet ist, in dem aktivierten Schwebemode die Sitzschale 2 derart zu bewegen, dass diese einer Körperbewegung eines in der Sitzschale 2 sitzenden Insassen folgt. Dabei erfolgt keine Arretierung der Sitzschale 2 in einer eingenommenen Sitzposition P1.

Alternativ kann ein Verstellmode aktiviert sein, wobei die Steuereinheit 6 eingerichtet ist, in dem aktivierten Verstellmode die Sitzschale 2 derart zu bewegen, dass diese der Körperbewegung eines in der Sitzschale 2 sitzenden Insassen in eine gewünschte Sitzposition P1 folgt, und wobei die Sitzschale 2 in der gewünschten Sitzposition P1 beispielsweise mittels Selbsthemmung der Antriebseinheit 5 arretiert wird.

In einer weiteren Alternative kann ein Fahrkomfortmode aktiviert sein, wobei die Steuereinheit 6 eingerichtet ist, in dem aktivierten Fahrkomfortmode die Sitzschale 2 in Abhängigkeit von momentanen Fahrbewegungen des Fahrzeugs zu verstellen.

Figur 13 zeigt die Verstelleinheit 40, welche als ein Seilzugmechanismus 41.1 ausgebildet ist. Beispielsweise ist der Seilzugmechanismus 41.1 als ein Kreisbogenseilzug mit einem umlaufenden Seil 41.2 ausgebildet.

Die Antriebseinheit 5 umfasst mindestens eine Motorgetriebeeinheit. Die Motorgetriebeeinheit ist als ein selbsthemmendes Schneckengetriebe 5.1.4 mit Motor 5.1.1 ausgebildet. Eine Spindel des Schneckengetriebes 5.1.4 ist mit dem Seilzugmechanismus 41.1 über einen Bowdenzugmechanismus 5.1.5 gekoppelt ist. Die Antriebseinheit 5 betätigt dabei den Bowdenzugmechanismus 5.1.5, der das Seil 41.2 betätigt, das auf einen mit der Sitzschale 2 bewegungsgekoppelten Mitnehmer 13 wirkt.

Das Seil 41.2 ist mit dem selbsthemmenden Schneckengetriebe 5.1.4 bewegungsgekoppelt. Beispielsweise ist das Seil 41.2 mittels zwei Umlenkrollen 41.3 gehalten, die mittels Bowdenzügen 5.1.2 des Bowdenzug-mechanismus 5.1.5 von der Motorgetriebeeinheit angetrieben werden. Darüber hinaus ist das Seil 41.2 mit dem Mitnehmer 13 gekoppelt, der an der Sitzschale 2 befestigt ist.

Wenn der Mitnehmer 13 im Wesentlichen einem Kreisbogen oder Bogensegment der Sitzschale 2 folgt und das Seil 41.2 sich sitzseitig auf dem Bogensegment ablegt, kann die Verstelleinheit 40 weitgehend steif ausgelegt werden, da kaum ein Längenausgleich für das Seil 41.2 notwendig ist. Die Sitzschale 2 ist über das Seil 41.2 und die Selbsthemmung des Schneckengetriebes 5.1.4 arretiert. Zur Verstellung der Sitzschale 2 kann diese durch Aktivierung des Motors 5.1.1 motorisch verstellt werden.

Des Weiteren sind die Sitzschale 2, insbesondere deren zugehörige Verstelleinheit 40, und das Basiselement 3 und/oder die Sitzbasis 9 und der zwischen diesen angeordnete Kraftsensor 7 derart wirkungsgekoppelt, dass als Kraftresultierende die von dem in der Sitzschale 2 sitzenden Insassen in die Sitzschale 2 eingeleitete Kraft F(I) auf den Kraftsensor 7 wirkt.

Um die vom Insassen in die Sitzschale 2 eingeleitete Kraft F(I) zu messen, stützt sich die Verstelleinheit 40 mit dem Seilzugmechanismus 41.1, den Umlenkrollen 41.3 und dem Mitnehmer 13, sowie die Antriebseinheit 5 über den Kraftsensor 7 gegen die Sitzbasis 9, zum Beispiel einen Fahrzeugboden, ab. Durch die Anordnung des Kraftsensors 7 zwischen der Sitzschale 2 mit den auf einem Bauträger, wie einem Querträgerelement 3.1 oder einer Trägerplatte 3.2, montierten Komponenten , wie Verstelleinheit 40, Umlenkrollen 41.3, Mitnehmer 13, Antriebseinheit 5, und der Sitzbasis 9 wird sichergestellt, dass eine zur Sicherstellung einer Spielfreiheit notwendige Vorspannung des Seiles 41.2 nicht das Kraftmesssignal überlagert, sondern nur resultierende Kräfte aus dem Verstellwunsch auf den Kraftsensor 7 wirken.

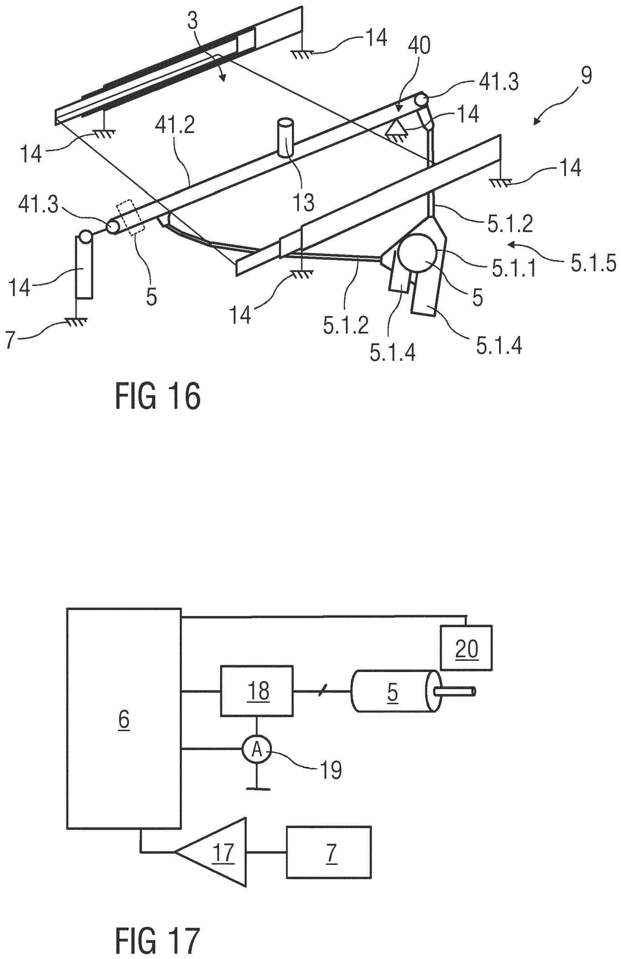

Dazu ist das Basiselement 3 als Träger mit der Verstelleinheit 40 und der Antriebseinheit 5 beispielsweise mittels Abstützpunkten 14 (dargestellt in Figur 17) an der Sitzbasis 9 gelagert oder angeordnet. Um diesen singulären Punkt der Kraftübertragung sicherzustellen, ist die Verstelleinheit 40 an den Abstützpunkten 14 derart gelagert, dass die Kraftkomponente in Messrichtung möglichst nicht beeinflusst wird.

Hierzu kann eine Führung des Seils 41.2 vorgesehen sein. Die Führung des Seils 41.2 über die Umlenkrollen 41.3 und die Bewegung des Seils 41.2 über die Bowdenzüge 5.1.2 ermöglicht es darüber hinaus, dass die Antriebseinheit 5 dem Basiselement 3 zugeordnet ist, so dass die Sitzschale 2 weniger Gewicht trägt. Hierdurch ist auch die elektrische Versorgung des Motors 5.1.1 vereinfacht.

Für die Drehung der Sitzschale 2 des Sitzes 10 um die Hochachse Z kann eine separate Verstelleinrichtung, wie zum Beispiel die oben beschriebene Verstelleinheit 4.2, gezeigt in Figuren 1 bis 6, vorgesehen sein. Eine weitere alternative Verstelleinrichtung für die Verstellung um die Hochachse Z kann beispielsweise eine aus einem Motor 5.1.1 und einer Schneckenradeinheit gebildete weitere Antriebseinheit 5, 5.1 oder 5.2, die direkt ohne Seilzugmechanismus 41.1 an den Drehpunkt der Sitzschale 2 oder entlang eines Bogensegments der Sitzschale 2 mit dem Drehpunkt als Mittelpunkt angeordnet und mit der Sitzschale 2 gekoppelt ist, sein, wobei ein weiterer Kraftsensor 7 als Übertragungselement von tangential wirkenden Kräften zwischen der Verstelleinrichtung und dem Basiselement 3 angeordnet ist und die tangential wirkenden Kräfte misst (nicht näher dargestellt).

Darüber hinaus können Kraftschwellwerte parametriert werden, die in der Steuereinheit 6 hinterlegt sind und bei der Aktivierung des jeweiligen Verstellmechanismus 4 oder 40 berücksichtigt werden. Durch die Möglichkeit der Parametrierung von Kraftschwellwerten, des zeitlichen Verhaltens des Verstellmechanismus 4 oder 40 und des Übersetzungsfaktors von Krafteinwirkung und Verstellgeschwindigkeit kann das Verstellverhalten des Sitzes 1 bzw. 10 angepasst und geändert werden. Insbesondere ist durch weitere Sensoren zur Ortsbestimmung eine ortsabhängige Verstellungsparametrierung möglich.

Zusätzlich kann eine Anzahl von Endanschlägen 16 zur Begrenzung der Verstellbewegung der Sitzschale 2 sowohl für den Sitz 1 als auch für den Sitz 100 vorgesehen sein.

Ferner kann eine Einklemmschutzeinrichtung auf Basis einer Sitzumfeldsensorik für den jeweiligen Sitz 1 oder 10 vorgesehen sein.

Auch können Umfeldeinflüsse, wie zum Beispiel eine Fahrzeugbeschleunigung oder -verzögerung, berücksichtigt, insbesondere kompensiert, werden. Hierzu werden mittels der Steuereinheit 6 Fahrzeugparameter, wie Fahrzeugbeschleunigung oder -verzögerung, bestimmt und entsprechend ein angepasstes Steuersignal für die jeweilige Antriebseinheit 5, 5.1 und/oder 5.2 erzeugt.

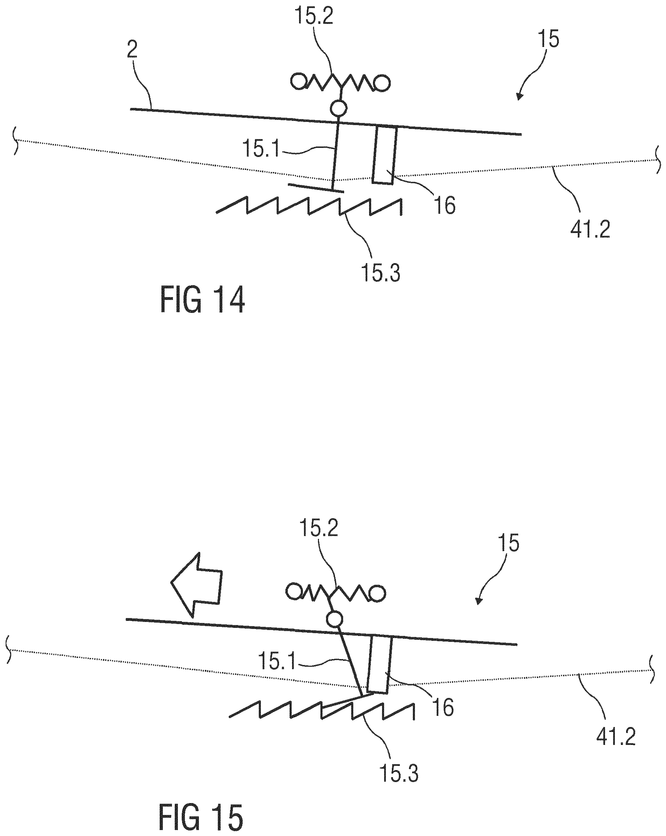

Auch kann die Sitzschale 2 mit einer Überlastsicherung 15 zur Aufnahme von Überlastkräften versehen sein, wie in Figuren 14 und 15 gezeigt.

**Figur 14** zeigt eine schematische Ansicht der Überlastsicherung 15 im unbelasteten Zustand.

**Figur 15** zeigt eine schematische Ansicht der Überlastsicherung 15 im belasteten Zustand.

Die Überlastsicherung 15 verhindert, dass hohe Kräfte, zum Beispiel aufgrund eines Unfalls, über das Seil 41.2 und die selbsthemmende Antriebseinheit 5 oder 5.1, 5.2 abgeleitet werden müssen.

Eine solche Überlastsicherung 15 kann beispielsweise aus zumindest einem T-förmigen Hebel 15.1 gebildet sein, dessen Fußpunkt an der Sitzschale 2 mittels eines, insbesondere flexiblen, Gelenks 15.2, zum Beispiel einem Stoff- oder Federgelenk, schwenkbar gelagert ist. Alternativ können auch zwei T-förmige Hebel 15.1, die miteinander verbunden sind, vorgesehen sein (nicht näher dargestellt).

Oberhalb des Querbalkens des T-förmigen Hebels 15.1 ist das Seil 41.2, insbesondere ein Stahlseil, angeschlagen. Unterhalb des Querbalkens des Hebels 15.1 ist eine zu dem Hebel 15.1 korrespondierende Sicherungsstruktur 15.3, insbesondere eine Brems- oder Profilstruktur, zum Beispiel eine entgegengesetzte Sägezahnstruktur, angeordnet.

Im unbelasteten Zustand nach Figur 15 ist der Querbalken oberhalb der Sicherungsstruktur 15.3 gestellt, so dass die Sitzschale 2 verstellt werden kann.

Kommt es zu einer übermäßigen Krafteinleitung, so gelangt der Querbalken des Hebels 15.1 in Eingriff in die Sicherungsstruktur 15.3, so dass eine Verstellung der Sitzschale 2 blockiert ist.

Zusätzlich kann ein Endanschlag 16 zur Begrenzung einer Verstellbewegung der Sitzschale 2 vorgesehen sein.

**Figur 16** zeigt eine perspektivische Ansicht des Verstellmechanismus 40 mit der Verstelleinheit 41 mit gekoppelter Antriebseinheit 5, welche dem Basiselement 3 zugeordnet sind und mittels Abstützpunkten 14 gelagert sind.

**Figur 17** zeigt schematisch eine Ausführungsform für eine signal- und steuertechnische Kopplung von Steuereinheit 6, Kraftsensor 7 und Antriebseinheit 5.

Das Signal des Kraftsensors 7 wird mittels eines Messverstärkers 17 verstärkt und der Steuereinheit 6 zur Erzeugung eines Stellsignals für die Antriebseinheit 5 zugeführt. Das Stellsignal für die Antriebseinheit 5 wird über eine Brückenschaltung 18, insbesondere eine elektronische H-Brückenschaltung, zur Ansteuerung des Motors 5.1.1 zugeführt.

Zur Steuerung des Motors 5.1.1 können zusätzlich über einen Strommesser 19 und einen Motorsensor 20, insbesondere einen Hall-Sensor, Messsignale an die Steuereinheit 6 zur Steuerung des Motors 5.1.1 zurückgeführt werden.

### Bezugszeichenliste

- 1,100: Sitzanordnung
- 2: Sitz, Sitzschale
- 2.1: Rückenlehnenbereich
- 2.2: Sitzflächenbereich
- 2.3: Träger
- 3: Basiselement
- 3.1: Querträgerelement
- 3.2: Trägerplatte
- 3.2.1: Durchgangsöffnung
- 4, 4.1, 4.2, 40: Verstelleinheit
- 4.1.1: Schiene
- 4.1.2: Rolle
- 4.1.3: Endanschlag
- 4.1.4: Trägerelement
- 4.1.5: Führungsschiene
- 4.1.6: Durchgangsöffnung
- 4.2.1: Ringschiene
- 4.2.2: obere Ringschiene
- 4.2.3: untere Ringschiene
- 4.2.4: innere Ringöffnung
- 41.1: Seilzugmechanismus
- 41.2: Seil
- 41.3: Umlenkrolle
- 5: Antriebseinheit
- 5.1, 5.2: Antriebseinheit
- 5.1.1: Motor
- 5.1.2: Bowdenzug
- 5.1.3: Kraftübertragungselement
- 5.1.4: Schneckengetriebe
- 5.1.5: Bowdenzugmechanismus
- 5.2.1: Motor
- 5.2.2: Bowdenzug
- 6: Steuereinheit
- 7.1, 7.2, 7: Kraftsensor
- 8: Längsverstelleinheit
- 9: Sitzbasis
- 10: Aktivierungseinheit
- 11: Eingabeeinheit
- 12: Kontaktsensor
- 13: Mitnehmer
- 14: Abstützpunkt
- 15: Überlastsicherung
- 15.1: Hebel
- 15.2: Gelenk
- 15.3: Sicherungsstruktur
- 16: Endanschlag
- 17: Messverstärker
- 18: Brückenschaltung
- 19: Strommesser
- 20: Motorsensor
- F: Kraftfluss
- F(I): vom Insassen eingeleitete Kraft
- F(5): von der Antriebseinheit eingeleitete Kraft
- P1: Design- oder Sitzposition
- T1, T2: Translationsfreiheitsgrade
- R1, R2, R3: Rotationsfreiheitsgrade
- X: Längsachse
- Y: Querachse
- Z: Hochachse
- x: Längsrichtung

## Patentansprüche

1. Sitzanordnung (1, 100), umfassend:
- zumindest einen Sitz (2) mit einem Sitzflächenbereich (2.2) und einem Rückenlehnenbereich (2.1),
- ein Basiselement (3), an welchem der Sitz (2) verstellbar angeordnet ist,
- mindestens eine Verstelleinheit (4, 40, 4.1, 4.2) zur Verstellung des Sitzes (2) relativ zu dem Basiselement (3) und/oder einer Sitzbasis (9), und
- mindestens eine Antriebseinheit (5, 5.1, 5.2),
wobei die Antriebseinheit (5, 5.1, 5.2) eingerichtet ist, das Basiselement (3) und den Sitz (2) selbsthemmend zu arretieren, **dadurch gekennzeichnet, dass** die Arretierung sowohl durch eine von einem in dem Sitz (2) sitzenden Insassen über den Sitz (2) in die Verstelleinheit (4, 40, 4.1, 4.2) eingeleitete Kraft (F(I)) als auch durch eine von der Antriebseinheit (5, 5.1, 5.2) in die Verstelleinheit (4.1, 4.2, 41) eingeleitete Kraft (F(5)) aufhebbar ist.

2. Sitzanordnung (1, 100) nach Anspruch 1, wobei im Kraftfluss (F) zwischen dem Sitz (2) und der Sitzbasis (9) und/oder dem Basiselement (3) mindestens ein Kraftsensor (7, 7.1, 7.2) angeordnet ist.

3. Sitzanordnung (1, 100) nach Anspruch 2, wobei eine Steuereinheit (6) vorgesehen ist, die mit der Antriebseinheit (5, 5.1, 5.2), dem Kraftsensor (7, 7.1, 7.2) und/oder einer Aktivierungseinheit (10) gekoppelt ist.

4. Sitzanordnung (1, 100) nach Anspruch 3, wobei die Aktivierungseinheit (10) als eine Eingabeeinheit (11) und/oder ein Kontaktsensor (12) zur Aktivierung eines Verstellmodus ausgebildet ist.

5. Sitzanordnung (1, 100) nach Anspruch 3 oder 4, wobei die Steuereinheit (6) eingerichtet ist, in einem aktivierten Schwebemode, den Sitz (2) derart zu bewegen, dass dieser einer Körperbewegung eines in dem Sitz (2) sitzenden Insassen folgt.

6. Sitzanordnung (1, 100) nach einem der Ansprüche 3 bis 5, wobei die Steuereinheit (6) eingerichtet ist, in einem aktivierten Verstellmode, den Sitz (2) derart zu bewegen, dass dieser der Körperbewegung eines in dem Sitz (2) sitzenden Insassen in eine gewünschte Sitzposition (P1) folgt, und wobei der Sitz (2) in der gewünschten Sitzposition (P1) arretiert wird.

7. Sitzanordnung (1, 100) nach einem der Ansprüche 3 bis 6, wobei die Steuereinheit (6) eingerichtet ist, in einem aktivierten Fahrkomfortmode, den Sitz (2) in Abhängigkeit von momentanen Fahrbewegungen des Fahrzeugs zu verstellen.

8. Sitzanordnung (1, 100) nach einem der vorhergehenden Ansprüche, wobei die Verstelleinheit (4.1, 4.2, 41) ausgebildet ist, eine Verstellbewegung des Sitzes (2) relativ zum Basiselement (3) und/oder der Sitzbasis (9) auszuführen.

9. Sitzanordnung (1, 100) nach Anspruch 8, wobei die Antriebseinheit (5, 5.1, 5.2) mindestens eine Motorgetriebeeinheit umfasst, die mit der Verstelleinheit (4) gekoppelt ist.

10. Sitzanordnung (1, 100) nach einem der Ansprüche 8 oder 9, wobei die Antriebseinheit (5, 5.1, 5.2) einen Bowdenzugmechanismus (5.1.5) oder eine Spindel betätigt, der bzw. die ein Seil (41.2) des Seilzugmechanismus (41.1) oder eine Schiene der Verstelleinheit betätigt, das bzw. die auf einen mit dem Sitz (2) bewegungsgekoppelten Mitnehmer (13) wirkt.

11. Sitzanordnung (1, 100) nach einem der Ansprüche 8 bis 9, wobei der Sitz (2) und das Basiselement (3) und der zwischen diesen angeordnete Kraftsensor (7, 7.1, 7.2) derart wirkungsgekoppelt sind, dass als Kraftresultierende die von dem in dem Sitz (2) sitzenden Insassen in den Sitz (2) eingeleitete Kraft (F(I)) auf den Kraftsensor (7, 7.1, 7.2) wirkt.

12. Sitzanordnung (1, 100) nach einem der vorhergehenden Ansprüche, wobei die Verstelleinheit (4, 4.1, 4.2, 40) mittels Abstützpunkten (14) an der Sitzbasis (9) gelagert ist.

13. Sitzanordnung (1, 100) nach einem der vorhergehenden Ansprüche, wobei eine Anzahl von Endanschlägen (4.1.3) zur Begrenzung der Verstellbewegung des Sitzes (2) vorgesehen ist.

14. Sitzanordnung (1, 100) nach einem der vorhergehenden Ansprüche, wobei der Sitz (2) mit einer Überlastsicherung (15) zur Aufnahme von Überlastkräften versehen ist und/oder eine Einklemmschutzeinrichtung auf Basis einer Sitzumfeldsensorik vorgesehen ist.

15. Sitzanordnung (1, 100) nach einem der vorhergehenden Ansprüche, wobei der Sitz (2) als eine Sitzschale ausgebildet ist.

## Claims

1. Seat assembly (1, 100), comprising:
- at least one seat (2) with a seat surface region (2.2) and a backrest region (2.1),
- a base element (3) on which the seat (2) is adjustably arranged,
- at least one adjustment unit (4, 40, 4.1, 4.2) for adjusting the seat (2) relative to the base element (3) and/or a seat base (9), and
- at least one drive unit (5, 5.1, 5.2),
wherein the drive unit (5, 5.1, 5.2) is configured to lock the base element (3) and the seat (2) in a self-locking manner, **characterized in that** the locking is releasable both by a force (F(I)) introduced into the adjustment unit (4, 40, 4.1, 4.2) via the seat (2) by an occupant sitting in the seat (2), and also by a force (F(5)) introduced into the adjustment unit (4.1, 4.2, 41) by the drive unit (5, 5.1, 5.2).

2. Seat assembly (1, 100) according to Claim 1, wherein at least one force sensor (7, 7.1, 7.2) is arranged in the force flow (F) between the seat (2) and the seat base (9) and/or the base element (3).

3. Seat assembly (1, 100) according to Claim 2, wherein a control unit (6) is provided which is coupled to the drive unit (5, 5.1, 5.2), the force sensor (7, 7.1, 7.2) and/or an activation unit (10).

4. Seat assembly (1, 100) according to Claim 3, wherein the activation unit (10) is configured as an input unit (11) and/or a contact sensor (12) for activating an adjustment mode.

5. Seat assembly (1, 100) according to Claim 3 or 4, wherein the control unit (6) is configured, in an activated float mode, to move the seat (2) such that this follows a body movement of an occupant sitting in the seat (2).

6. Seat assembly (1, 100) according to any of Claims 3 to 5, wherein the control unit (6) is configured, in an activated adjustment mode, to move the seat (2) such that it follows the body movement of an occupant sitting in the seat (2) into a desired seat position (P1), and wherein the seat (2) is locked in the desired seat position (P1).

7. Seat assembly (1, 100) according to any of Claims 3 to 6, wherein the control unit (6) is configured, in an activated driving comfort mode, to adjust the seat (2) depending on momentary travel movements of the vehicle.

8. Seat assembly (1, 100) according to any of the preceding claims, wherein the adjustment unit (4.1, 4.2, 41) is designed to execute an adjustment movement of the seat (2) relative to the base element (3) and/or the seat base (9).

9. Seat assembly (1, 100) according to Claim 8, wherein the drive unit (5, 5.1, 5.2) comprises at least one gear motor unit which is coupled to the adjustment unit (4).

10. Seat assembly (1, 100) according to either of Claims 8 and 9, wherein the drive unit (5, 5.1, 5.2) actuates a Bowden cable mechanism (5.1.5) or a spindle, which actuates a cable (41.2) of the cable-pull mechanism (41.1) or a rail of the adjustment unit which acts on a carrier (13) coupled for movement purposes to the seat (2) .

11. Seat assembly (1, 100) according to either of Claims 8 and 9, wherein the seat (2) and the base element (3) and the force sensor (7, 7.1, 7.2) arranged in between are actively coupled such that as a resulting force, the force (F(I) introduced by the occupant sitting in the seat (2) acts on the force sensor (7, 7.1, 7.2).

12. Seat assembly (1, 100) according to any of the preceding claims, wherein the adjustment unit (4, 4.1, 4.2, 40) is mounted on the seat base (9) by means of support points (14).

13. Seat assembly (1, 100) according to any of the preceding claims, wherein a number of end stops (4.1.3) are provided to limit the adjustment movement of the seat (2) .

14. Seat assembly (1, 100) according to any of the preceding claims, wherein the seat (2) is provided with an overload protection (15) for absorbing overload forces, and/or a trap-protection device based on seat environment sensors.

15. Seat assembly (1, 100) according to any of the preceding claims, wherein the seat (2) is designed as a seat shell.

## Revendications

1. Ensemble (1, 100) formant siège comprenant :
- au moins un siège (2) avec une zone (2.2) de surface d'assise et une zone de dossier (2.1),
- un élément de base (3) sur lequel le siège (2) est agencé de manière réglable,
- au moins une unité de réglage (4, 40, 4.1, 4.2) pour le réglage du siège (2) par rapport à l'élément de base (3) et/ou à une base de siège (9), et
- au moins une unité d'entraînement (5, 5.1, 5.2),
l'unité d'entraînement (5, 5.1, 5.2) étant conçue pour bloquer de manière autobloquante l'élément de base (3) et le siège (2), **caractérisé en ce que** le blocage est apte à être supprimé aussi bien par une force (F(l)) introduite dans l'unité de réglage (4, 40, 4.1, 4.2) par un occupant assis dans le siège (2) via le siège (2) que par une force (F(5)) introduite dans l'unité de réglage (4.1, 4.2, 41) par l'unité d'entraînement (5, 5.1, 5.2).

2. Ensemble (1, 100) formant siège selon la revendication 1, dans lequel au moins un capteur de force (7, 7.1, 7.2) est disposé dans le flux de force (F) entre le siège (2) et la base du siège (9) et/ou l'élément de base (3).

3. Ensemble (1, 100) formant siège selon la revendication 2, dans lequel il est prévu une unité de commande (6) qui est reliée à l'unité d'entraînement (5, 5.1, 5.2), au capteur de force (7, 7.1, 7.2) et/ou à une unité d'activation (10).

4. Ensemble (1, 100) formant siège selon la revendication 3, dans lequel l'unité d'activation (10) est conçue sous la forme d'une unité d'entrée (11) et/ou un capteur de contact (12) pour activer un mode de réglage.

5. Ensemble (1, 100) formant siège selon la revendication 3 ou 4, dans lequel l'unité de commande (6) est agencée pour déplacer le siège (2) dans un mode flottant activé de telle sorte que celui-ci suive un mouvement du corps d'un occupant assis dans le siège (2).

6. Ensemble (1, 100) formant siège selon l'une des revendications 3 à 5, dans lequel l'unité de commande (6) est agencée pour déplacer le siège (2) dans un mode de déplacement activé de telle sorte que celui-ci suive le mouvement du corps d'un occupant assis dans le siège (2) dans une position d'assise souhaitée (P1), et dans lequel le siège (2) est bloqué dans la position d'assise souhaitée (P1).

7. Ensemble (1, 100) formant siège selon l'une des revendications 3 à 6, dans lequel l'unité de commande (6) est agencée, dans un mode confort de conduite activé, pour régler le siège (2) en fonction des mouvements de conduite momentanés du véhicule.

8. Ensemble (1, 100) formant siège selon l'une des revendications précédentes, dans lequel l'unité de réglage (4.1, 4.2, 41) est conçue pour effectuer un mouvement de réglage du siège (2) par rapport à l'élément de base (3) et/ou à la base du siège (9).

9. Ensemble (1, 100) formant siège selon la revendication 8, dans lequel l'unité d'entraînement (5, 5.1, 5.2) comprend au moins une unité de transmission à moteur qui est reliée à l'unité de réglage (4).

10. Ensemble (1, 100) formant siège selon l'une des revendications 8 ou 9, dans lequel l'unité d'entraînement (5, 5.1, 5.2) actionne un mécanisme de câble Bowden (5.1.5) ou une vis qui actionne un câble (41.2) du mécanisme de câble (41.1) ou un rail de l'unité de réglage qui agit sur un entraîneur (13) relié en mouvement avec le siège (2).

11. Ensemble (1, 100) formant siège (1, 100) selon l'une des revendications 8 à 9, dans lequel le siège (2) et l'élément de base (3) et le capteur de force (7, 7.1, 7.2) disposé entre ceux-ci sont reliés de telle sorte que la force (F(l) transmise au siège (2) par l'occupant assis dans le siège (2) agit sur le capteur de force (7, 7.1, 7.2) en tant que résultante de force.

12. Ensemble (1, 100) formant siège selon l'une des revendications précédentes, dans lequel l'unité de réglage (4, 4.1, 4.2, 40) est montée sur la base du siège (9) au moyen de points d'appui (14).

13. Ensemble (1, 100) formant siège selon l'une des revendications précédentes, dans lequel un certain nombre de butées de fin de course (4.1.3) sont prévues pour limiter le mouvement de réglage du siège (2).

14. Ensemble (1, 100) formant siège selon l'une des revendications précédentes, dans lequel le siège (2) est pourvu d'une sécurité de surcharge (15) pour absorber les forces de surcharge et/ou il est prévu un dispositif anti-pincement basé sur un capteur d'environnement de siège.

15. Ensemble (1, 100) formant siège selon l'une des revendications précédentes, dans lequel le siège (2) est conçu sous la forme d'une coque de siège.
